# EUROPEAN PATENT APPLICATION

(11) **EP 1 818 292 A1**
(43) Date of publication of application: **15.08.2007**
(21) Application number: 07102315.4
(22) Date of filing: 13.02.2007
(51) Int. Cl.: B65G 47/51, B65G 47/82

(54) **Method of transferring products to an output of a variable-capacity store, and variable-capacity store implementing such a method**

(30) Priority: 14.02.2006 IT TO20060106
(71) Applicant: Samas S.r.l. Societa a Socio Unico, 10090 Bruino (IT)
(72) Inventor: Colombo, Alberto, 10100 Torino (IT); Spatolisano, Francesco, 10088 Volpiano (IT)
(74) Representative: Jorio, Paolo

(57) **Abstract**

A method of transferring products to an output (6) of a variable-capacity store (1); the products (3) are loaded, at an input (5), onto shelves (10) forming part of supporting members (8) equally spaced along an annular path (9) having a forward branch (21) and a return branch (22) between the input (5) and output (6); the lengths of the forward branch and return branch (21, 22) are variable by respective equal opposite amounts; the products (3) are fed along the forward branch (21) by synchronously operating two parallel conveyor chains or belts (7), to which the supporting members (8) are hinged at the top, and the products are then pushed in a horizontal direction along the respective shelves (10) to the output (6) while the conveyor chains or belts (7) are moving.

## Description

The present invention relates to a method of transferring products to an output of a variable-capacity store of the type comprising two parallel conveyor chains, from which are suspended a number of supporting members or so-called "gondolas".

In stores of this sort, products are transferred in ranks, i.e. in horizontal lines, from an input to an output in "gondolas", each of which comprises one or more parallel shelves, and is hinged at the top to two conveyor chains. The conveyor chains are located on opposite sides of the "gondolas", are powered to run at the same speed, wind about a number of sprockets, and extend along an annular path comprising a forward branch and a return branch. The forward and return branches have bends, i.e. comprise a number of up and down portions between top and bottom end points defined by the sprockets, and have respective lengths that can be varied by equal opposite amounts, by lifting or lowering some of the sprockets, to vary the capacity of the store as a function of product outflow requirements.

In known solutions, on reaching the output, the lines of products are unloaded off the respective shelves by means of a vertically fixed push member moved horizontally by an actuator. When the actuator is working, the conveyor chains are stopped in such a position as to keep the push member, the line of products for unloading, and the output aligned horizontally, and for this reason are step-operated.

The forces of inertia caused by repeated stopping and starting of the two chains, however, tend to rock the "gondolas" as they travel along the top and bottom end points. As a result, the "gondolas" clash and may even become entangled with one another if a sufficiently ample radius of curvature is not provided along the curved portions of the path and/or if the "gondolas" are not spaced sufficiently far apart. Moreover, along the forward branch, the products tend to slip on and even fall off the shelves.

Moreover, repeated stopping and starting of the chains seriously limits the maximum product output rate achievable by the store.

It is an object of the present invention to provide a method of transferring products to an output of a variable-capacity store, designed to provide a straightforward, low-cost solution to the aforementioned drawbacks.

According to the present invention, there is provided a method of transferring products to an output of a variable-capacity store; the method comprising the steps of:
- loading said products, at an input, onto shelves forming part of supporting members equally spaced along an annular path comprising a forward branch and a return branch between said input and said output; the lengths of said forward branch and said return branch being variable by respective equal opposite amounts;
- feeding said products along said forward branch by synchronously operating two parallel conveyor chains or belts located on opposite sides of said supporting members; said supporting members being hinged at the top to said two conveyor chains or belts about respective horizontal axes, so that said shelves are maintained suspended; and
- pushing said products, at the end of said forward branch, in a horizontal direction along said shelves to said output;
and being characterized in that said step of pushing the products is performed while the conveyor chains or belts are moving.

The present invention also relates to a variable-capacity store.

According to the present invention, there is provided a variable-capacity store for implementing the method as claimed in any one of Claims 1 to 4, and comprising:
- an input and at least one output for products;
- two parallel, synchronously operated conveyor chains or belts;
- a number of supporting members, each comprising at least one respective shelf for supporting said products, and which are interposed between said conveyor chains or belts, are hinged at the top to said two conveyor chains or belts about respective horizontal axes to keep said shelves suspended, and are equally spaced along an annular path comprising a forward branch and a return branch between said input and said output; the lengths of said forward branch and said return branch being variable by respective equal opposite amounts;
- at least one push member operated to translate in a horizontal direction and push the products along said shelves to said output;
the store being characterized in that said push member is movable vertically, and by also comprising:
- actuating means to translate said push member vertically; and
- means for synchronizing said push member with said conveyor chains or belts to push the products to said output while said conveyor chains or belts are moving.

A non-limiting embodiment of the invention will be described by way of example with reference to the accompanying drawings, in which:
Figure 1 shows a schematic front view of a store for implementing a preferred embodiment of the method according to the present invention;
Figure 2 shows a larger-scale topside view in perspective of a detail in Figure 1;
Figure 3 shows a larger-scale underside view in perspective of a detail in Figure 2;
Figure 4 shows a schematic sequence of operations by which to unload products from the store.

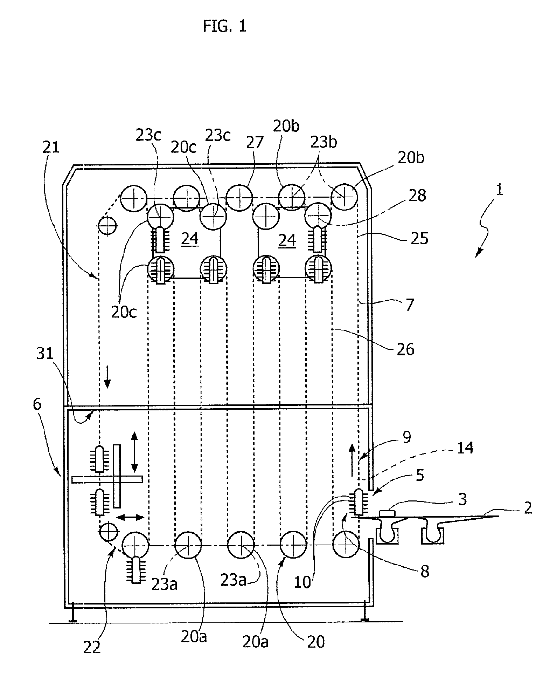

Number 1 in Figure 1 indicates a variable-capacity store (shown schematically) defining a storage unit forming part of a line for transferring products 3 arranged, for example, in ranks, i.e. in horizontal lines perpendicular to the transfer direction. Store 1 comprises an input 5; an output 6; and two conveyor chains 7, of which only one is shown schematically. Chains 7 are parallel, and support a number of supporting members, or so-called "gondolas", 8 interposed between chains 7 and equally spaced along an annular path 9.

Each member 8 comprises a number of, e.g. four or six, parallel shelves 10, onto which the incoming products 3 at input 5 are loaded in a manner not described in detail; and two vertical sidewalls, which are fitted in fixed positions to the sides of shelves 10 in a manner not described in detail, and are hinged at their top ends to chains 7 about a horizontal axis 14 to keep shelves 10 suspended.

Chains 7 extend about sprockets 20 to define path 9, and are operated synchronously in known manner not shown. Path 9 comprises a forward branch 21 from input 5 to output 6, along which shelves 10 are loaded with products 3; and a return branch 22 from output 6 to input 5, along which shelves 10 are empty. Some of the sprockets, indicated 20a, are located at the bottom of store 1, and have fixed axes of rotation 23a; some, indicated 20b, are located at the top end of store 1, and have fixed axes of rotation 23b; and some, indicated 20c, are located in between, and have axes of rotation 23c which are movable vertically to vary the lengths of branches 21 and 22 by respective equal opposite amounts. More specifically, sprockets 20c are fitted to a plate 24, which is moved vertically, by a motor not shown, with respect to a fixed frame 31 of store 1. Branches 21 and 22 comprise vertical up portions 25; vertical down portions 26; and curved portions 27, 28, which connect portions 25, 26 and define the top and bottom end points, respectively, of path 9 at the various sprockets 20.

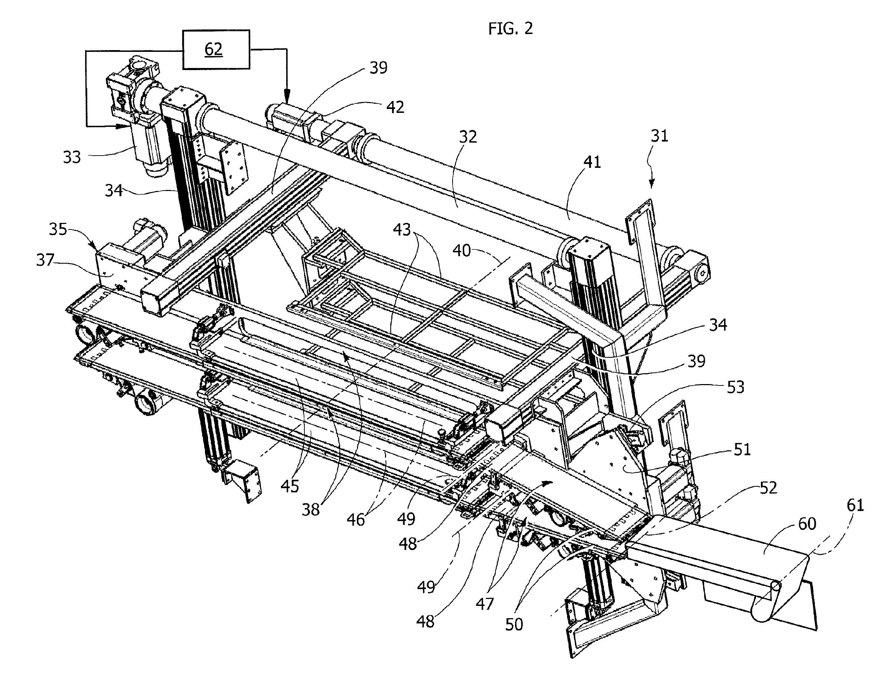

With reference to Figure 2, at output 6, fixed frame 31 comprises a cross member 32 supporting an actuator 33; and two uprights 34 located on opposite sides of cross member 32 and defining respective guides. A structure 35 is movable vertically, guided by uprights 34 and operated by actuator 33 by means of a drive (not shown) housed inside uprights 34 and cross member 32. The drive converts rotation of actuator 33 to vertical translation of structure 35, and in particular comprises belt drives.

Structure 35 comprises a vertical plate 37 facing "gondolas" 8 moving down along path 9, and which has two vertically spaced openings 38 defining output 6. Structure 35 also comprises two guides 39 located over and in fixed positions with respect to plate 37, and extending in a horizontal direction 40 perpendicular to plate 37. Guides 39 are joined at one end by a cross member 41 supporting an actuator 42, and are located on opposite sides of "gondolas" 8 moving down along path 9, and on opposite sides of two superimposed push members 43. Members 43 are each aligned, in direction 40, with a respective opening 38, are connected to guides 39 to move in direction 40, and are operated together by actuator 42 by means of a drive (not shown) housed inside guides 39 and cross member 41. The drive converts rotation of actuator 42 to horizontal translation of members 43, and in particular comprises belt drives.

On the outside, i.e. on the opposite side to "gondolas" 8, plate 37 supports two belt conveyors 45, each located at a respective opening 38, and which are powered to feed the lines of products 3 in horizontal directions 46 perpendicular to direction 40. Respective inclined conveyors 47, converging with each other, are provided downstream from conveyors 45 in the travelling direction of the lines of products, and comprise respective input end portions 48 adjacent to the outputs of conveyors 45 and connected to plate 37 to rotate about respective axes 49 parallel to direction 40; and respective output end portions 50 fitted to a lateral plate 51, which is connected to frame 31, so as to rotate about a fixed axis 52 parallel to direction 40, by means of a curved guide 53 (shown partly).

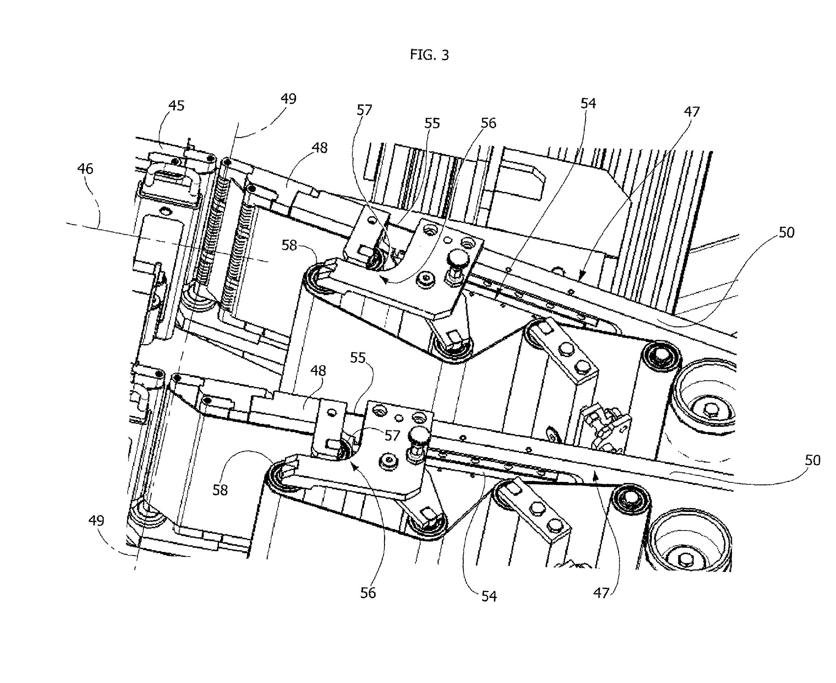

With reference to Figure 3, portions 48, 50 of each conveyor 47 are connected to each other by a guide 54 to slide in the travelling direction of the lines of products, and the belt 55 of conveyor 47 is wound underneath onto a "retractable roller" type system 56 to vary the length of conveyor 47 automatically as plate 37 translates. System 56 comprises two guide rollers 57, 58 fitted to portions 48, 50 respectively, and which invert the path of belt 55 as it travels along the underside of conveyor 47.

With reference to Figure 3, a single belt conveyor 60 is located downstream from conveyors 47, and is oscillated by an actuator (not shown) about an axis 61 to receive the lines of products 3 selectively from conveyors 47.

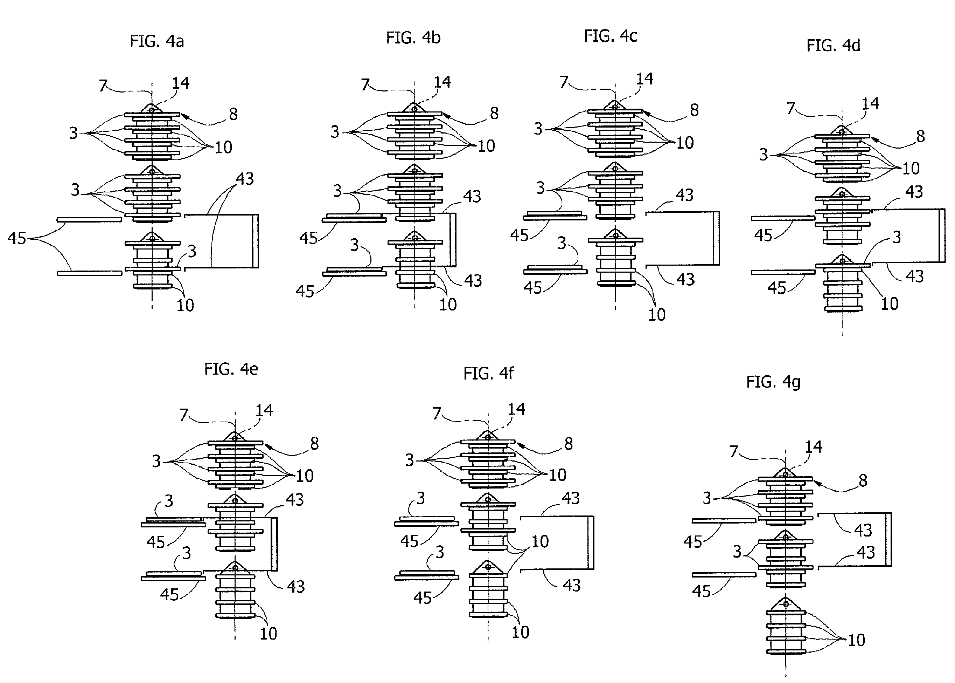

In actual use, when the lines of products 3, loaded onto shelves 10 at input 5 and transferred by operating chains 7, reach the end of branch 21, they are pushed in direction 40 along shelves 10 and through openings 38 by members 43 while chains 7 are moving, preferably at constant speed. Actuators 42 and 33 are controlled by one or more control units 62 (shown schematically), which synchronizes translation of members 43 automatically with the vertical downward travel of "gondolas" 8 on the basis of signals from sensors not shown or described in detail. More specifically, actuator 33 is controlled to align members 43 and openings 38 with the two downward-moving lines of products to be unloaded (Figure 4a), and then impart to structure 35 the same downward-travelling speed as "gondolas" 8. As structure 35 follows the downward movement of the "gondolas", actuator 42 is operated to move members 43 forward (Figure 4b) and then back (Figure 4c) with respect to plate 37. As members 43 move forward, conveyors 45 are stopped to receive products 3. Actuators 33, 42 are then operated in the same way to unload another two lines of products (Figures 4d, 4e, 4f). The two lines of products unloaded simultaneously by members 43 are carried by different "gondolas" 8 : numbering in ascending order downwards the positions of the lines of products/shelves in each "gondola", the product line pairs unloaded simultaneously off a four-shelf "gondola" are preferably unloaded from:
- position "4" of the top "gondola" and position "3" of the bottom "gondola";
- position "2" of the top "gondola" and position "1" of the bottom "gondola".

In the case of six-shelf "gondolas" (not shown), the product line pairs unloaded simultaneously are preferably unloaded from:
- position "6" of the top "gondola" and position "3" of the bottom "gondola";
- position "5" of the top "gondola" and position "2" of the bottom "gondola";
- position "4" of the top "gondola" and position "1" of the bottom "gondola".

The two lines of products unloaded onto conveyors 45 are transferred together onto respective conveyors 47, and from there successively onto conveyor 60, which, at the same time, oscillates to receive the lines of products from one or other of conveyors 47. More specifically, conveyor 60 is operated to receive two product lines (expelled successively through corresponding opening 38) from one conveyor 47, and then rotate to receive another two product lines from the other conveyor 47.

The speed of chains 7, and therefore of actuator 33, can be adjusted according to the transfer rate demanded by the line downstream from conveyor 60.

As will be clear from the foregoing description, the method described with reference to store 1 in the accompanying drawings provides for eliminating step operation of chains 7, and so, on the one hand, speeding up the output rate of products 3 onto conveyor 60, and, on the other, reducing rocking of "gondolas" 8 at the top and bottom end points.

Clearly, changes may be made to store 1 as described herein without, however, departing from the scope of the present invention.

A different number of push members 43 and openings 38 may be provided to unload a different number of product lines; and/or, once through plate 37, products 3 may be fed in direction 40 as opposed to direction 46; and/or products 3 may be arranged in other than lines, as described above.

## Claims

1. A method of transferring products to an output (6) of a variable-capacity store (1); the method comprising the steps of:
- loading said products (3), at an input (5), onto shelves (10) forming part of supporting members (8) equally spaced along an annular path (9) comprising a forward branch (21) and a return branch (22) between said input (5) and said output (6); the lengths of said forward branch and said return branch (21, 22) being variable by respective equal opposite amounts;
- feeding said products (3) along said forward branch (21) by synchronously operating two parallel conveyor chains or belts (7) located on opposite sides of said supporting members (8); said supporting members (8) being hinged at the top to said two conveyor chains or belts (7) about respective horizontal axes (14), so that said shelves (10) are maintained suspended; and
- pushing said products (3), at the end of said forward branch (21), in a horizontal direction along said shelves (10) to said output (6);
and being **characterized in that** said step of pushing the products (3) is performed while the conveyor chains or belts (7) are moving.

2. A method as claimed in Claim 1, **characterized in that** said step of pushing the products (3) is performed while said conveyor chains or belts are moving at constant speed.

3. A method as claimed in Claim 1 or 2, **characterized by** pushing the products to said output (6) simultaneously along two separate shelves.

4. A method as claimed in Claim 3, **characterized in that** the two separate shelves along which the products (3) are pushed form part of two different supporting members (8).

5. A variable-capacity store (1) for implementing the method as claimed in any one of the foregoing Claims, and comprising:
- an input (5) and at least one output (6) for products;
- two parallel, synchronously operated conveyor chains or belts (7);
- a number of supporting members (8), each comprising at least one respective shelf (10) for supporting said products (3), and which are interposed between said conveyor chains or belts, are hinged at the top to said two conveyor chains or belts (7) about respective horizontal axes (14) to keep said shelves (10) suspended, and are equally spaced along an annular path (9) comprising a forward branch (21) and a return branch (22) between said input (5) and said output (6); the lengths of said forward branch and said return branch (21, 22) being variable by respective equal opposite amounts;
- at least one push member (43) operated to translate in a horizontal direction and push the products (3) along said shelves (10) to said output (6);
the store being **characterized in that** said push member (43) is movable vertically, and by also comprising:
- actuating means (33) to translate said push member (43) vertically; and
- means (62) for synchronizing said push member (43) with said conveyor chains or belts (7) to push the products (3) to said output (6) while said conveyor chains or belts (7) are moving.

6. A store as claimed in Claim 5, **characterized by** comprising a further push member (43) spaced vertically apart from, and movable together with, said push member (43).

7. A store as claimed in Claim 5 or 6, **characterized in that** said output comprises at least one through opening (38) formed in a plate (37), aligned horizontally with said push member (43) and movable vertically, together with said push member (43), by said actuating means (33).

8. A store as claimed in Claim 7, **characterized by** comprising:
- at least one horizontal first belt conveyor (45) fitted to said plate (37), outside said opening (38), to receive the products (3) pushed by said push member (43); and
- a second belt conveyor (47), which is located downstream from said first belt conveyor, rocks during the vertical movement of said plate (37), and is automatically adjustable in length to compensate the vertical movement of said first belt conveyor (45).
